# EUROPEAN PATENT APPLICATION

(11) **EP 1 666 412 A1**
(43) Date of publication of application: **07.06.2006**
(21) Application number: 04772175.8
(22) Date of filing: 19.08.2004
(51) Int. Cl.: C01B 31/12, H01G 9/058, H01B 1/12

(54) **HYDROCARBON MATERIAL AND METHOD FOR PREPARATION THEREOF**

(30) Priority: 26.08.2003 JP 2003301124
(71) Applicant: OSAKA GAS CO., LTD., Osaka-shi, Osaka 541-0046 (JP); Japan Envirochemicals, Ltd., Osaka-shi, Osaka 541-0045 (JP)
(72) Inventor: TAJIRI, Hiroyuki; c/o OSAKA GAS CO., LTD.,, Osaka;5410046 (JP); TAKAHASHI, Katsuyuki; c/o OSAKA GAS CO., LTD.,, Osaka; 5410046 (JP); KUNIMOTO, Yasunori; c/o JAPAN ENVIROCHEMICALS, LTD, Osaka;5410045 (JP); HAMASAKI, Isao;c/o JAPAN ENVIROCHEMICALS, LTD.,, Osaka 5410045 (JP)
(74) Representative: Müller-Boré & Partner Patentanwälte
(86) International application number: PCT/JP2004/012219
(87) International publication number: WO 2005/019105

(57) **Abstract**

The present invention provides a hydrocarbon material with a high ion adsorption ability (specific capacitance) per unit volume of the electrode obtained by heating a starting material mainly composed of polysaccharides, which are easy to obtain and inexpensive. More specifically, the hydrocarbon material can be obtained by heating a polysaccharide-based raw material together with a heat reaction auxiliary under an inert gas atmosphere, and has the following properties: (a) the hydrogen/carbon ratio (atomic ratio) is within the range of 0.05 to 0.5; (b) the specific surface area determined by the BET method is in the range of 600 to 2000 m²g; (c) the mesopore capacitance determined by the BJH method is in the range of 0.02 to 1.2 ml/g; (d) the total pore volume measured by the MP method is in the range of 0.3 to 1.25 ml/g; and (e) the bulk density of an electrode obtained using the hydrocarbon material is 0.60 g/ml or higher.

## Description

### TECHNICAL FIELD

The present invention relates to electroconductive hydrocarbon materials.

### BACKGROUND OF THE INVENTION

Polymer materials are excellent in moldability, light weight, and mass production properties. Organic polymer-based materials with electrical semiconductivity or conductivity in addition to the above properties are required in a large number of industrial fields, especially in electronics industries.

In particular, organic polymer-based semiconductors, such as silicon, germanium, etc., which have properties of n-type or p-type semiconductors, and which can be applied through the p-n junction to a diode, a solar cell, etc., are demanded in addition to organic polymer-based semiconductors whose electroconductivity exists in the semiconductive or conductive range. Polyacetylene, polyphenylene, etc., are known as such organic polymer-based materials with properties of n-type or p-type semiconductors.

For example, "Synthetic metal" (Kagaku Zokan 87, (1980), pp. 15-28) describes a technique of polymerizing acetylene to directly obtain a film-like polyacetylene, and then doping to this an electron donating or accepting dopant, thereby obtaining p-type or n-type semiconductors with sharply increased electroconductivity. However, since polyacetylene is likely to oxidize due to contact with oxygen, it is very impractical.

Unlike polyacetylene, polyphenylene has comparatively excellent oxidation stability. However, polyphenylene is possibly limited in the degree of electronic conductivity attained by doping with a doping agent because the phenylene skeleton of polyphenylene has single bonds in a linear arrangement and the degree of the conjugation of the carbon atoms is small. In addition, impurity control by a dopant is also possibly limited.

Thus, electroconductive organic polymer materials which have semiconductive or conductive electroconductivity, excellent physical properties, and superior oxidation stability were developed (Japanese Examined Patent Publication No. 1994-43545. These are polycyclic aromatic hydrocarbon materials (generally referred to as "low-temperature processed carbon materials or polyacene-based organic semiconductors) and are manufactured as semiconductor materials and widely applied at present. Such polyacene-based organic semiconductors are advantageous for their stability, such as oxidation resistance, chemical resistance, and heat resistance, the fact that a wide range of electroconductivity can be achieved by selecting reaction conditions, and their ability to allow both p-(negative ion) and n- (positive ion) doping, which is difficult in various prior-art conductive polymers (poly aniline, polypyrrole, etc.).

Polyacene-based organic semiconductors have a high order structure with molecular-size gaps formed by developing a piece of one-dimensional graphite into a three-dimensional mesh. Therefore, as compared with activated carbon, the ion adsorption ability is high and a large amount of dopant can be stored immediately. Moreover, polyacene-based organic semiconductors are extremely stable due to their reduced material volume change while dopants are doped and undoped, and thus have attracted attention for use as an electric double layer capacitor. Since this material does not contain any heavy metal at all, it is also an environmentally friendly and highly reliable material.

However, when such well-known polyacene-based organic semiconductors are applied as an electrode material for use in an electric double layer capacitor, the ion adsorption ability per unit volume of the electrode is inadequate and, further, the material cost is high since phenol resin is used as a starting material.

Therefore, hydrocarbon materials that have high ion adsorption ability per unit volume or unit weight of an electrode and that can be easily manufactured from a low-cost material are desired.

Recently, it has been reported that an electrode for a capacitor with a high capacitance per unit weight and per unit volume can be manufactured by using, as an electrode material, active polycyclic aromatic hydrocarbon materials manufactured by heating a material comprising pitch as a main ingredient under an inert atmosphere (Japanese Unexamined Patent Publication Nos. 2001-266640 and 2001-274044).

However, the materials described in these documents have room for further improvement in view of ease of availability, cost performance of a starting material, and capacitance per unit volume of an electrode.

### SUMMARY OF THE INVENTION

The invention aims to provide hydrocarbon materials having a high capacitance per unit volume of an electrode (F/cc), which are obtained by heat-treating materials mainly comprising low-cost polysaccharides, and methods for manufacturing the same. The capacitance per unit volume of an electrode (F/cc) is obtained by multiplying the capacitance per unit weight of an electrode (F/g) by the bulk density of an electrode (g/cc), and hereinafter may be sometimes referred to as "specific capacitance per unit volume". Further, the invention aims to provide electrodes and capacitors manufactured using the hydrocarbon materials.

The inventors carried out intensive research in order to overcome the above-described problems of the prior art, and as a result found that hydrocarbon materials with specific physical properties can be prepared by processing specific polysaccharide-based raw materials under specific conditions. The inventors conducted further research and accomplished the present invention based on these findings.

More specifically, the present invention provides the following hydrocarbon materials and methods for manufacturing the same.
Item 1. A hydrocarbon material having the following properties, which is prepared by heat-treating a polysaccharide-based raw material with a thermal reaction reagent under an inert gas atmosphere, the hydrocarbon material: thermal reaction auxiliary
   (a) hydrogen/carbon (atomic ratio) of 0.05 to 0.5;
   (b) a specific surface area, measured by the BET method, of 600 to 2000 m²/g;
   (c) a mesopore volume, measured by the BJH method, of 0.02 to 1.2 ml/g;
   (d) a total pore volume, measured by the MP method, of 0.3 to 1.25 ml/g;
      and
   (e) a bulk density of 0.60 g/ml or higher for an electrode obtained using the hydrocarbon material.
Item 2. A hydrocarbon material according to Item 1, wherein the polysaccharide-based raw material has an oxygen concentration ranging from 25% to 50%.
Item 3. A hydrocarbon material according to Item 2, wherein the polysaccharide-based raw material with an oxygen concentration ranging from 25% to 50% is prepared by oxygen crosslinking or deoxygenating a polysaccharide-based raw material.
Item 4. A hydrocarbon material according to any one of Items 1 to 3, wherein the polysaccharide-based raw material is a cellulose-based material and/or a starch-based material.
Item 5. A hydrocarbon material according to Item 4, wherein the cellulose-based material is at least one selected from the group consisting of a coconut shell, wood flour, and fruit husk or seed Item 6. A hydrocarbon material according to Item 4, wherein the starch-based material is at least one selected from the group consisting of grain and its ear axis.
Item 7. A hydrocarbon material according to Item 1, wherein the thermal reaction auxiliary is zinc chloride.
Item 8. A method for preparing a hydrocarbon material comprising the following steps of:
   (a) subjecting a polysaccharide-based raw material to oxygen crosslinking or deoxygenation, thereby preparing a polysaccharide-based raw material with an oxygen concentration ranging from 25% to 50%; and
   (b) heat-treating the polysaccharide-based raw material with an oxygen concentration ranging from 25% to 50% together with a thermal reaction auxiliary under an inert gas atmosphere.
Item 9. A preparation method according to Item 8, wherein the amount of the thermal reaction auxiliary is about 0.3 to about 2.0 times the weight of the polysaccharide-based raw material.
Item 10. An electrode comprising a hydrocarbon material of any one of Items 1 to 7.
Item 11. A method for manufacturing an electrode, comprising mixing a hydrocarbon material of any one of Items 1 to 7, carbon black, and a binder, and then forming the mixture.
Item 12. An electrode manufactured by the manufacturing method of Item 11.
Item 13. A capacitor provided with an electrode comprising a hydrocarbon material of any one of items 1 to 7.

### DETAILED DESCRIPTION OF THE INVENTION

### I. Method for preparing a hydrocarbon material

The hydrocarbon material of the invention can be manufactured by heat-treating a polysaccharide-based raw material under an inert gas atmosphere. As polysaccharide-based raw materials, a starting material mainly comprising a compound in which monosaccharides are jointed by a glucoside linkage can be mentioned. Typical examples of such starting materials include cellulose-based materials, starch materials, glycogen, etc.

Cellulose-based materials contain as a main ingredient a compound (cellulose) in which β-glucoses are linearly condensed. Such cellulose-based starting materials may contain cellulose in a proportion of 20% or more, 30% or more, and preferably 50% or more. Such cellulose-based starting materials may also contain other ingredients, such as lignin, in addition to cellulose. Specific examples of such cellulose-based starting materials include, for example, coconut shells, wood flour, fruit husk or seed (e. g., walnut, peach, plum, etc.), etc., and coconut shells and wood flour are preferable.

Starch starting materials comprise a polymer of α-glucose (amylose, amylopectin, etc.) as a main ingredient. Specific examples of such starch starting materials include grain (e.g., rice, wheat, corn, etc.), grain ear axis, etc.

The above substances may be used singly or in a combination of two or more. In order for the hydrocarbon materials of the invention to have the desired properties, hydrocarbon materials having many oxygen atoms and hydrogen atoms are preferred. Polysaccharide-based raw materials with an oxygen concentration of about 25% to about 50%, and especially about 30% to about 50%, are preferable. Herein, the oxygen concentration denotes oxygen atoms on a weight percentage basis (wt%) (weight content) contained in polysaccharide-based raw materials measured by elemental analysis.

As polysaccharide-based raw materials that can be used in the invention, although the above-mentioned polysaccharide-based raw materials (coconut shells, etc.) can be used, it is preferable to use polysaccharide-based raw materials whose oxygen concentration is adjusted to its optimal concentration within a range of about 25% to about 50% by subjecting cellulose-based materials, etc., to oxygen crosslinking or deoxygenation in advance.

The hydrocarbon materials of the invention are prepared by, for example, the following steps.

### (1) oxygen crosslinking or deoxygenation of polysaccharide-based raw materials.

There are various methods for subjecting polysaccharide-based raw materials to oxygen crosslinking or deoxygenation, such as a method for heating polysaccharide-based raw materials, a method for contacting polysaccharide-based raw materials to acid liquids, such as nitric acid, sulfuric acid, etc. It is preferable to use powder polysaccharide-based raw materials with a large surface area so that oxygen crosslinking or deoxygenation is likely to occur.

When polysaccharide-based raw materials are heated, the heating temperature may be, for example, about 100°C to about 350°C, and preferably about 150°C to about 300°C. The pressure may be generally around atmospheric pressure. The reaction time period is about 1 to about 30 hours. More specifically, for example, powder polysaccharide-based raw materials may be heated to about 150°C to about 300°C from room temperature over about 0.5 to about 10 hours, held at the same temperature for about 1 to about 20 hours, and then cooled to room temperature.

When the oxygen concentration of a polysaccharide-based raw material is originally high, such polysaccharide-based raw material is generally heated in a gas with an oxygen content of about 0 vol.% to about 10 vol.%, and deoxidized, thereby reducing the oxygen concentration of the polysaccharide-based raw material. On the other hand, when the oxygen concentration of a polysaccharide-based raw material is originally low, such polysaccharide-based raw material is generally heated in a gas with an oxygen content of about 5 vol. % to about 30 vol.%, and subjected to oxygen crosslinking, thereby increasing the oxygen concentration of the polysaccharide-based raw material. Since oxygen crosslinking or deoxygenation depends on the oxygen concentration of the gas or the heating temperature/time, such reactions are conducted under appropriate conditions suitably selected from the above-specified range.

Contacting a polysaccharide-based raw material with an acid liquid, such as nitric acid, sulfuric acid, etc., may be conducted with a known method.

The oxygen concentration of a polysaccharide-based raw material after oxygen crosslinking or deoxygenation is preferably 25% to 50%, and more preferably, 30% to 48%. With a polysaccharide-based raw material having an oxygen concentration of less than 25%, the hydrocarbon material of the invention prepared using such a polysaccharide-based raw material is not likely to achieve the desired properties. Since the optimal oxygen concentration varies according to the type of polysaccharide-based raw material, the amount of thermal reaction auxiliary, etc., and the optimal concentration can be suitably selected from the above-mentioned range.

### (2) Preparation of a polysaccharide-based raw material

The polysaccharide-based raw materials obtained as described above (preferably, polysaccharide-based raw materials with an oxygen concentration of 25% to 50%) can be subjected to the heat treatment process (3) described later. However, in order to increase the specific surface area of the hydrocarbon material obtained, the heat treatment is preferably conducted after a thermal reaction auxiliary is added to the polysaccharide-based raw material and mixed uniformly.

Examples of thermal reaction auxiliaries include inorganic salts, such as zinc chloride, phosphoric acid, calcium chloride, sodium hydroxide, etc., and at least one member selected from the above can be used. Among the above, zinc chloride is preferable. The amount of thermal reaction auxiliary varies according to the type of polysaccharide-based raw material, the type of inorganic salt, etc., and the amount is generally in a proportion of 30 to 200 parts by weight, and preferably 50 to 180 parts by weight, based on 100 parts by weight of polysaccharide-based raw material.

Any method may be used for mixing a polysaccharide-based raw material with a thermal reaction auxiliary insofar as they are uniformly mixed, and, for example, a planetary mixer, a kneader, etc., can be mentioned.

In order to facilitate the handling of a starting material prepared from the mixture of the polysaccharide-based raw material and the thermal reaction auxiliary obtained as described above (hereinafter, this mixture is referred to as a "starting material mixture"), the starting material mixture may be formed into a predetermined shape, such as a film, plate, chip, etc.

When the starting material mixture is formed into a predetermined shape, a forming auxiliary can be further mixed in order to improve the moldability, if required. Any known forming auxiliary can be used without limitation.

When the starting material mixture is subjected to press molding, a forming auxiliary with a binding property, such as cellulose, carboxymethyl cellulose (CMC), methyl cellulose (MC), etc., can be used. The amount of cellulose, when used as a forming auxiliary, is usually about 5 to about 50 parts by weight, preferably about 10 to about 40 parts by weight, based on 100 parts by weight of polysaccharide-based raw material, which is a main ingredient of the starting material mixture.

In the case of hot forming, a thermosetting resin, such as phenol resin (e. g., rezol, novolac, etc.), can also be used as a forming auxiliary. The amount of such thermosetting resin, when used as a forming auxiliary, is usually about 5 to about 50 parts by weight, preferably about 10 to about 40 parts by weight, based on 100 parts by weight of polysaccharide-based raw material, which is a main ingredient of the starting material mixture. The use of a thermosetting resin as a forming auxiliary also makes it possible to carry out cure molding by heating at about 50°C to about 250°C (preferably about 100°C to about 200°C), for about 1 to about 120 minutes (preferably about 5 to about 60 minutes).

### (3) Heat treatment process

The hydrocarbon material of the invention can be obtained by heat-treating the starting material mixture obtained as described above or its molded article.

Heat treatment of the starting material mixture or its molded article is conducted in an inert gas atmosphere, such as nitrogen, argon, etc. Since the heat treatment is conducted at a high temperature, a molded article under such treatment will burn if a gas which supports combustion, such as oxygen, or a flammable gas is mixed. The heat treatment pressure is not limited, and may be usually around normal pressure. The heat treatment temperature is suitably determined according to the composition of the starting material mixture, and other heat treatment conditions (heating rate, heating time, etc.), and may be within a range of about 500°C to about 700°C, and preferably about 520°C to about 700°C. In particular, in order to obtain a suitable hydrogen/carbon ratio, it is more preferable to set the peak temperature within a range of 550°C to 700°C. The heating rate is usually about 10 to about 250°C/hour, for example, and preferably about 20 to about 200°C/hour.

### (4) Washing and drying processes

The thermal reaction product obtained as above is washed with a detergent, thereby removing inorganic salt contained in the thermal reaction product. Any detergent can be used without limitation insofar as it is able to remove inorganic salt, and, for example, water, dilute hydrochloric acid, etc., can be mentioned. When the washing is carried out with dilute hydrochloric acid, the washed product is preferably further washed with water to remove chloride.

Subsequently, the washed product is dried, thereby obtaining the hydrocarbon material of the invention. There is no limitation on drying methods, and known drying methods may be used.

### II. Hydrocarbon material

The hydrocarbon material of the invention prepared as described above is provided with the following properties.

The hydrogen/carbon ratio (atomic ratio) (hereinafter, referred to as "H/C ratio") of the hydrocarbon material of the invention is usually about 0.05 to about 0.5, preferably about 0.1 to about 0.3, and more preferably, about 0.15 to about 0.3. Since the predetermined electroconductivity cannot be obtained when the H/C ratio is too high, the ion adsorption capacity per unit weight will not be sufficiently demonstrated. On the other hand, when the H/C ratio is too low, the hydrocarbon material will be heavily carbonated to provide ordinary activated carbon, which will also result in an insufficient ion adsorption capacity per unit weight.

Under conditions where the H/C ratio is within the above-specified range, the specific surface area of the hydrocarbon material of the invention by the BET method is usually in the range of 600 to 2000 m²/g, and preferably is in the range of 800 to 1800 m²/g. When the specific surface area is too large, there is a tendency for the bulk density to decrease and thus the ion adsorption amount per unit volume (specific capacitance) also decreases. One feature of the invention is that both the H/C ratio and specific surface area are within the above-described.

The mesopore volume by the BJH method of the hydrocarbon material of the invention is about 0.02 to about 1.2 ml/g, preferably about 0.02 to about 1.0 ml/g, and more preferably about 0.02 to about 0.2 ml/g. When the mesopore volume is too small, pores are not formed and thus the ion adsorption capacity per unit weight reduces. When the mesopore volume is too large, although the ion adsorption capacity per unit weight is large, the density decreases and the ion adsorption amount per unit volume also decreases, thus this is not preferable.

The BJH method is a method for obtaining a mesopore distribution advocated by Barrett, Joyner, and Halenda (E. P.Barrett, L.G.Joyner and P.P.Halenda, J.Am.Chem.Soc., 73 and 373, 1951)).

The total pore volume of the hydrocarbon material of the invention by the MP method is about 0.3 to about 1.25 ml/g, preferably about 0.3 to about 1.0 ml/g, and more preferably about 0.3 to about 0.7 ml/g. Since the micropore serving as an ion adsorption site decreases when this value is too low, a sufficient ion adsorption amount per unit volume is not obtained.

The MP method is a method for obtaining micropore volume, micropore area, and micropore distribution by the use of the "t-plot method" (B. C. Lippens, J. H. de Boer, J. Catalysis, 4,319(1965)), and was devised by M. Mikhail, Brunauer, and Bodor (R. S. Mikhail, S. Brunauer, E. E. Bodor, J. Colloid Interface Sci., 26, 45 (1968)).

### III. Manufacturing of electrodes using the hydrocarbon material

The hydrocarbon material of the invention obtained above has a large ion adsorption capacity per unit volume of electrode, and thus is useful as a material for manufacturing an electrode in a capacitor, etc.

### (1) Electrodes

An electrode can be manufactured using the hydrocarbon material of the invention as an electrode material.

For example, the hydrocarbon material of the invention is pulverized, the pulverized hydrocarbon material, carbon black, and a binder are mixed, and then the mixture is formed, thereby yielding an electrode.

Known pulverization methods can be employed for pulverizing the hydrocarbon material without limitation. For example, pulverization methods using a ball mill, a jet mill, etc., can be mentioned. The mean particle size of the pulverized material is about 2 µm to about 20 µm, and preferably about 3 µm to about 10 µm. The amount of carbon black is in a proportion of about 0.5 to about 30 parts by weight, and preferably about 1 to about 20 parts by weight, based on 100 parts by weight of the pulverized material. Examples of a binder include polytetrafluoroethylene resin, styrene-butadiene rubber (SBR), polyvinylidene fluoride (PVDF), etc., and polytetrafluoroethylene resin is preferable. A powdered binder is preferable in view of easy moldability. The amount of binder may be, for example, about 1 to about 30 parts by weight, based on 100 parts by weight of the pulverized material.

Known mixing devices can be used without limitation for mixing the pulverized material, carbon black, and a binder, and for example, commonly used mixing devices, such as mixer, kneader, etc., can be employed.

Examples of methods for forming the mixture obtained include press molding, extrusion molding, etc., and press molding is preferable. The thickness of the electrode can be suitably determined according to the usage purpose of the electrode.

### (2) Capacitors

A capacitor can be manufactured using the electrodes obtained in (1) above. For example, the electrodes obtained in (1) above are dried to give positive and negative electrodes, and then a separator and electrolytic solution are combined with the electrodes, thereby yielding a capacitor.

Although the shape of the electrodes can be suitably determined according to the purpose of use, a sheet-like electrode is preferable. The electrodes may be dried until the moisture contained therein is completely removed, and may be generally dried at about 70°C to about 280°C for about 10 hours. The dried electrodes are made positive and negative.

Examples of a collector include stainless steel mesh, aluminum, etc., and among these, stainless steel mesh is especially preferred. The thickness of a collector may be about 0.02 mm to about 0.5 mm.

The structure of a separator is not limited, and a single layer or multi layer separator can be used. Although the materials of a separator are not limited, polyolefin (e.g., electrolytic capacitor paper, polyethylene, and polypropylene), polyamide, kraft paper, glass, cellulose-based material, etc., can be mentioned. In view of heat resistance and a safety design of a capacitor, the material is suitably selected from the above. Among the above, electrolytic capacitor paper is preferable. A separator is preferably sufficiently dried.

Any known nonaqueous electrolytic solution, such as ammonium salt, can be used for an electrolytic solution. Specific examples include electrolytic solutions obtained by dissolving ammonium salt, such as triethylmethylammonium tetrafluoroborate (Et₃MeNBF₄), tetraethylammonium tetrafluoroborate (Et₄NBF₄), etc., in an organic solvent, such as propylene carbonate, ethylene carbonate, diethyl carbonate, dimethyl carbonate, methyl ethyl carbonate, dimethoxy ethane, γ-butyrolactone, methyl acetate, methyl formate, or a mixed solvent composed of a combination of two or more of these. The concentration of electrolytic solution is not limited, and electrolytic solutions with a concentration ranging from 0.5 mol/l to 2 mol/l are generally practical. Electrolytic solutions with moisture of 100 ppm or less are preferable.

A capacitor can be obtained by assembling the above-described electrodes, separator, and electrolytic solution in, for example, a dry box.

One characteristic of the capacitor of the invention thus obtained is a large ion adsorption amount (specific capacitance) per unit volume of the electrode. For example, the ion adsorption amount thereof is 25 F/cc or more, preferably about 25 to about 40 F/cc, and more preferably about 26 to about 35 F/cc. The ion adsorption amount (specific capacitance) per unit weight of the electrode is, for example, 30 F/g or more, preferably about 34 to about 50 F/g. The bulk density of the electrode is 0.60 g/cc or more, and preferably 0.65 g/cc or more. Thus, the electrode manufactured from the hydrocarbon of the invention has high bulk density. The specific ratio is measured by following the method described in Example 1.

Moreover, the hydrocarbon material of the invention is also useful as an adsorbent for water treatments, a smoke eliminating adsorbent, a deodorizing adsorbent, etc.

### BEST MODE FOR CARRYING OUT THE INVENTION

Hereinafter, the characteristics of the present invention are described in more detail with reference to Examples and Comparative Examples, but the invention is not limited thereto.

### Example 1

First, coconut shells as a main ingredient were deoxidized. More specifically, coconut shell powder (40.0% oxygen concentration) was put in a porcelain dish, and was heated in a mixed gas (oxygen 5 volume %, nitrogen 95 volume %) using a small cylindrical oven. In the heat treatment, the coconut shell powder was heated to 250°C from room temperature in 2 hours, held at that temperature for 7 hours, cooled to room temperature, and the result was removed from the cylindrical oven. Elemental analysis of deoxydized coconut shells was conducted to obtain the oxygen concentration thereof (measurement device: Perkin-Elmer elemental analysis device "PE2400 series II, CHNS/O"). The oxygen concentration was measured to be 34.6%.

Zinc chloride as a thermal reaction auxiliary was added to the deoxidized coconut shells, and mixed. Zinc chloride was mixed in a proportion of 50 parts by weight based on 100 parts by weight of the deoxidized coconut shells. An appropriate amount of water was added thereto, and mixed, thereby obtaining an aqueous slurry (85% by weight of solid content and 15% by weight of moisture).

The aqueous slurry was put in a graphite dish, and heat-treated using a small cylindrical oven. In the heat treatment, the aqueous slurry in the graphite dish was heated to 600°C at a heating rate of 120°C/hour under nitrogen atmosphere, held at this temperature for 1 hour, naturally cooled in the oven, and removed from the oven.

The heat-treated mixture was washed with dilute hydrochloric acid, and then washed with distilled water until the pH reached about 7. The heat-treated mixture was dried, thereby providing the hydrocarbon material of the invention.

The hydrocarbon material thus obtained was subjected to elemental analysis to determine the H/C ratio (measurement device: Perkin-Elmer elemental analysis device "PE2400 series II, CHNS/O").

The isotherm was measured using nitrogen as adsorbate (measurement device: "NOVA1200" manufactured by Yuasa Ionics Inc.), and the specific surface area was calculated by the BET method based on the isotherm obtained.

The total pore volume was determined by the MP method based on the entire quantity of nitrogen gas adsorbed at around P/P₀≈ (approximately equal to) 1 of the relative pressure (P: adsorption equilibrium pressure, P₀: saturated vapor pressure (77k, N₂)).

The mesopore volume was measured by the BJH method.

The results obtained by the above-described measurement and calculation are listed in Table 1, shown later.

Subsequently, the hydrocarbon material was pulverized, and to 100 parts by weight of the hydrocarbon powder were added 10 parts by weight of carbon black and 8 parts by weight of polytetrafluoroethylene resin powder serving as a binder, followed by press molding, thereby providing a 0.5-mm-thick electrode.

The sheet-like electrode obtained above was cut into 1.5 cm × 1.5 cm pieces, and dried at 150°C for 2 hours. The obtained electrodes were made positive and negative. As a collector, a 0.2-mm-thick stainless steel mesh was used. As a separator, a fully-dried electrolytic condenser paper was used. As electrolytic solution, a solution of triethylmethylammonium tetrafluoroborate (Et₃MeNBF₄) with a concentration of 1.5 mol/l and propylene carbonate (PC) was used. Thus, a capacitor was assembled in a dry box.

Subsequently, the ion adsorption amount per unit volume (specific capacitance) was measured using the capacitor thus obtained. The specific capacitance was determined with respect to electric capacitance per unit volume of the capacitor (F/cc). More specifically, the maximum charging current of the capacitor was regulated to 50 mA and the capacitor was charged with 2. 5 V for 1 hour. Thereafter, the capacitor was discharged at a constant current of 1 mA until the capacitor voltage reached 0 V. The electric capacitance (F) was measured based on the inclination of the discharge curve, and the specific capacitance per unit volume of the electrode (F/cc) was determined based on the electric capacitance and the total volume of the positive and negative electrodes. The specific capacitance per weight of the electrode (F/g) was determined by dividing the specific capacitance per volume (F/cc) by the bulk density of the electrode (g/cc). The result is also listed in Table 1. Note that the bulk density of an electrode (g/cc) can be obtained by dividing the electrode weight (g) by the electrode volume (cc).

### Example 2

Coconut shells were used as in Example 1 and the coconut shells were not deoxidized. The oxygen concentration of the coconut shells was 40.0%. The hydrocarbon material of the invention was obtained similarly as in Example 1 except that 150 parts by weight of zinc chloride was added as a thermal reaction auxiliary per 100 parts by weight of the coconut shells.

In the same manner as in Example 1, using the obtained hydrocarbon material, electrodes were created, a capacitor was assembled, and the capacitor was charged and discharged. The obtained results are listed in Table 1.

### Example 3

The hydrocarbon material of the invention was obtained by following the procedure of Example 1 except that wood flour was used and was not subjected to deoxygenation or oxygen crosslinking, and heat treatment was conducted at a temperature of 550°C. The oxygen concentration of the wood flour was 38.0%.

In the same manner as in Example 1, using the obtained hydrocarbon material, electrodes were created, a capacitor was assembled, and the capacitor was charged and discharged. The obtained results are listed in Table 1.

### Example 4

Wood flour (38.0% oxygen concentration) was put in a porcelain dish, and heat-treated in air using a small cylindrical oven under the same conditions as in Example 1. The oxygen concentration was 45%. To 100 parts by weight of the oxygen-crosslinked wood flour were added 70 parts by weight of zinc chloride as a thermal reaction auxiliary together with water, providing a slurry. In the heat treatment, the wood flour in the porcelain dish was heated to 750°C under nitrogen atmosphere, and held at the same temperature for 1 hour, then naturally cooled in the oven, and removed therefrom. The following process was conducted under the same conditions as in Example 1.

Using the obtained hydrocarbon material, electrodes were prepared, a capacitor was assembled, and the capacitor was charged and discharged following the procedure of Example 1. The obtained results are listed in Table 1.

### Example 5

Coconut shells were employed as in Example 2. The hydrocarbon material of the invention was prepared in the same manner as in Example 2 except that 100 parts by weight of zinc chloride as a thermal reaction auxiliary was added to 100 parts by weight of the coconut shells and in the heat treatment using a small cylindrical oven, the coconut shells were heated to 550°C at a heating rate of 30°C/hour under nitrogen atmosphere.

Using the obtained hydrocarbon material, electrodes were prepared, a capacitor was assembled, and the capacitor was charged and discharged following the procedure of Example 1. The obtained results are listed in Table 1.

### Comparative Example 1

Coconut shell powder (40.0% oxygen concentration) was put in a porcelain dish, and heated in nitrogen using a small cylindrical oven under the same conditions as in Example 1. The oxygen concentration was 24.0%. To 100 parts by weight of the oxygen-crosslinked coconut shell powder was added 150 parts by weight of zinc chloride as a thermal reaction auxiliary together with water, providing a slurry. The heat treatment was conducted at 600°C under nitrogen atmosphere in the same manner as in Example 1. The other conditions are the same as in Example 1, yielding a hydrocarbon material.

Using the obtained hydrocarbon material, electrodes were prepared, a capacitor was assembled, and the capacitor was charged and discharged following the procedure of Example 1. The obtained results are listed in Table 1.

### Comparative Example 2

An active polycyclic aromatic hydrocarbon was obtained following the method described in Example 1 of Japanese Unexamined Patent Publication No. 2001-274044. The specific surface area of the obtained hydrocarbon material was 1640 m²/g.

Using the obtained hydrocarbon material, electrodes were prepared, a capacitor was assembled, and the capacitor was charged and discharged following the procedure of Example 1. The obtained results are listed in Table 1.

### Comparative Example 3

An active polycyclic aromatic hydrocarbon was obtained following the method described in Example 2 of Japanese Unexamined Patent Publication No. 2001-274044. The specific surface area of the obtained hydrocarbon material was 1810 m²/g.

Using the obtained hydrocarbon material, electrodes were prepared, a capacitor was assembled, and the capacitor was charged and discharged following the procedure of Example 1. The obtained results are listed in Table 1.

**Table 1**

| | Examples | | | | | Comparative Examples | | |
|---|---|---|---|---|---|---|---|---|
| | 1 | 2 | 3 | 4 | 5 | 1 | 2 | 3 |
| Oxygen concentation (%) | 34.6 | 40.0 | 38.0 | 45.0 | 42.0 | 24.0 | - | - |
| Amount of zinc chloride (parts by weight) | 50 | 150 | 50 | 70 | 100 | 150 | 300 | 300 |
| H/C ratio | 0.23 | 0.24 | 0.41 | 0.10 | 0.20 | 0.15 | 0.22 | 0.27 |
| Specific surface area (m²/g) | 800 | 1990 | 900 | 1200 | 1600 | 1500 | 1640 | 1810 |
| Total pore volume (ml/g) | 0.64 | 0.90 | 0.55 | 0.75 | 1.25 | 0.88 | 0.66 | 0.81 |
| Mesopore volume (ml/g) | 0.04 | 0.15 | 0.10 | 0.13 | 1.20 | 0.38 | 0.10 | 0.28 |
| Specific capacitance per unit volume of the electrode (F/cc) | 27.0 | 25.2 | 26.0 | 25.5 | 25.2 | 15.2 | 22.0 | 20.0 |
| Specific capacitance per unit weight of the electrode (F/g) | 36.0 | 36.0 | 36.1 | 37.0 | 33.3 | 26.7 | 40.0 | 40.0 |
| Bulk density of the electrode (g/cc) | 0.75 | 0.70 | 0.72 | 0.69 | 0.75 | 0.57 | 0.55 | 0.50 |

As can be seen from Table 1, the hydrocarbon material of the invention has a large specific capacitance per unit volume (F/cc) as compared with that of the Comparative Examples. It thereby becomes possible to provide capacitor electrodes with high capacitance and low cost.

### EFFECT OF THE INVENTION

The hydrocarbon material of the invention can be prepared by a heat treatment at a relatively low temperature using polysaccharides that are easy to obtain and inexpensive, and thus can achieve lower starting materials cost, running cost, etc., hence exhibiting an extremely high industrial value.

Since the hydrocarbon material of the invention has a high ion adsorption ability per unit volume, it can be used as an electrode material, such as for a capacitor, and can also help to achieve capacitors with high capacitance and reduced manufacturing cost.

## Claims

1. A hydrocarbon material, which is prepared by heat-treating a polysaccharide-based raw material with a thermal reaction auxiliary under an inert gas atmosphere, the hydrocarbon material having the following properties:
(a) hydrogen/carbon (atomic ratio) of 0.05 to 0.5;
(b) a specific surface area, measured by the BET method, of 600 to 2000 m²/g;
(c) a mesopore volume, measured by the BJH method, of 0.02 to 1.2 ml/g;
(d) a total pore volume, measured by the MP method, of 0.3 to 1.25 ml/g;
and
(e) a bulk density of 0. 60 g/ml or higher for an electrode obtained using the hydrocarbon material.

2. A hydrocarbon material according to Claim 1, wherein the polysaccharide-based raw material has an oxygen concentration ranging from 25% to 50%.

3. A hydrocarbon material according to Claim 2, wherein the polysaccharide-based raw material with an oxygen concentration ranging from 25% to 50% is prepared by oxygen crosslinking or deoxygenating a polysaccharide-based raw material.

4. A hydrocarbon material according to any one of Claims 1 to 3, wherein the polysaccharide-based raw material is a cellulose-based material and/or a starch-based material.

5. A hydrocarbon material according to Claim 4, wherein the cellulose-based material is at least one selected from the group consisting of a coconut shell, wood flour, and fruit husk or seed.

6. A hydrocarbon material according to Claim 4, wherein the starch-based material is at least one selected from the group consisting of grain and its ear axis.

7. A hydrocarbon material according to Claim 1, wherein the thermal reaction auxiliary is zinc chloride.

8. A method for preparing a hydrocarbon material comprising the following steps of:
(a) subjecting a polysaccharide-based raw material to oxygen crosslinking or deoxygenation, thereby preparing a polysaccharide-based raw material with an oxygen concentration ranging from 25% to 50%; and
(b) heat-treating the polysaccharide-based raw material with an oxygen concentration ranging from 25% to 50% together with a thermal reaction auxiliary under an inert gas atmosphere.

9. A preparation method according to Claim 8, wherein the amount of the thermal reaction auxiliary is about 0.3 to about 2.0 times the weight of the polysaccharide-based raw material.

10. An electrode comprising a hydrocarbon material of any one of Claims 1 to 7.

11. A method for manufacturing an electrode, comprising mixing a hydrocarbon material of any one of Claims 1 to 7, carbon black, and a binder, and then forming the mixture.

12. An electrode manufactured by the manufacturing method of Claim 11.

13. A capacitor provided with an electrode comprising a hydrocarbon material of any one of claims 1 to 7.
